# EUROPÄISCHE PATENTANMELDUNG

(11) **EP 0 744 859 A2**
(43) Veröffentlichungstag der Anmeldung: **27.11.1996**
(21) Anmeldenummer: 96105302.2
(22) Anmeldetag: 03.04.1996
(51) Int. Cl.: H04N 1/00

(54) **Verfahren und Anordnung zur verbesserten Informationsübertragung mittels Fax-Endgerät**

(30) Priorität: 24.05.1995 DE 19519167
(71) Anmelder: Deutsche Telekom AG, 53113 Bonn (DE)
(72) Erfinder: Schröder, Günter, 53175 Bonn (DE)

(57) **Zusammenfassung**

2.1. Die erfindungsgemäße Lösung dient der Erhöhung und der besseren Ausgestaltung des Informationsgehaltes von Informationen, die über Fax-Endgeräte übermittelt werden.
2.2. Erfindungsgemäß wird parallel zu dem per Fax zu übertragenden Dokument in das Fax-Endgerät des Absenders eine Sprachinformation zum Dokument eingegeben, aufgezeichnet und gespeichert. Nach Aufbau einer Verbindung zum Fax-Endgerät eines Empfängers wird während der bestehenden Verbindung sowohl das Dokument, als auch die Sprachinformation zum Fax-Endgerät des Empfängers übertragen. Das Dokument wird wie üblich gespeichert bzw. ausgegeben. Die Sprachinformation wird im Fax-Endgerät des Empfängers abrufbereit aufgezeichnet und eingespeichert.
2.3. Die erfindungsgemäße Lösung eignet sich insbesondere für solche Fälle, bei denen zusätzlich zu einem übertragenen Dokument zur Erläuterung des Sachverhaltes detaillierte umfangreiche Sprachinformationen erforderlich werden.

## Beschreibung

Die erfindungsgemäße Lösung dient insbesondere der Erhöhung und der besseren Ausgestaltung des Informationsgehaltes von Informationen die über Fax-Endgeräte übermittelt werden.

Als bekannt vorauszusetzende Lösungen sind Fax-Endgeräte anzusehen, welche in sich neben der Fax-Funktion die Funktionen von Telefon und Anrufbeantworter vereinen. Werden über derartige Fax-Endgeräte Dokumente übertragen die einer mündlichen Erläuterung bedürfen, ist es üblich, daß der Absender während einer ersten Verbindung das Dokument dem Empfänger per Fax übermittelt. Während einer zweiten per Telefon aufgebauten Verbindung werden dem Empfänger durch den Absender des Fax die notwendigen mündlichen Erläuterungen übermittelt.

Ziel der Erfindung ist eine Lösung, mittels der Fax-Informationen mit erläuterungsbedürftigem Inhalt einfach,schnell und kostengünstig übertragen werden können.

Die erfindungsgemäße Lösung basiert auf der Erweiterung der an sich bekannten Fax-Funktionen um eine Diktier- und Speicherfunktion für zusätzliche Sprachinformationen. Ein weiterer Schwerpunkt der erfindungsgemäßen Lösung beruht auf der zweckmäßigen Einbindung der Diktierfunktion in das Handling des Fax-Endgerätes. Voraussetzung zur Akzeptanz der neuen Diktierfunktion ist eine einfache Bedienung der Diktierfunktion im Rahmen der übrigen Fax-Funktionen.

Das erfindungsgemäße Verfahren beruht darauf, daß parallel zu dem in das Fax-Endgerät eingespeicherten Dokument ein Sprachkommentar aufgenommen und gespeichert wird.

Erfindungsgemäß wird die im Fax-Endgerät aufgenommene Dokumenten- und Sprachaufzeichnung gleichzeitig bzw. zeitversetzt während einer bestehenden Verbindung an den Empfänger der Information übertragen.

Erfindungsgemäß ist das Fax-Gerät mit einer Fernsteuer-Funktion für ein Fernsteuer-Mikrofon bzw. einen Telefonhörer mit Fernsteuer-Funktion ausgerüstet. Die Sprache kann entweder auf einem mechanischen Tonträger (Kassettenaufnahmegerät) oder auf einem Festkörperspeicher aufgenommen werden. Bei einer Fax-/Telefon-Kombination bietet es sich an, das Mikrofon des Telefonhörers gleichzeitig für die Realisierung der Sprachaufnahme zu verwenden.

Die erfindungsgemäße Lösung wird anhand eines Ausführungsbeispiels für eine Fax-/Telefon-Kombination näher erläutert. Erfindungsgemäß sind dazu auf der Innenseite des Telefonhörers zwei voneinander getrennte Funktionstasten angeordnet, die folgende Abläufe steuern:
- Aufnahme "Start"
- Stop
- Rücklauf und
- Start Wiedergabe.

Die erste Funktionstaste ist als eine mit einer Leuchtdiode (LED-Anzeige) kombinierte Aufnahmetaste 1 ausgebildet. Die zweite Funktionstaste ist als Tipp-Taste 2 ausgebildet, welche unter der Aufnahmetaste 1 angeordnet ist. Wird die Aufnahmetaste 1 kurz gedrückt, signalisiert die in der Aufnahmetaste 1 integrierte Leuchtdiode die Aufnahmebereitschaft. Wird dann die Tipp-Taste 2 kurz gedrückt, wird das Aufzeichnungsmedium angesteuert und die Sprachaufzeichnung ausgelöst. Im Ausführungsbeispiel ist der Anrufbeantworter als Kombigerät ausgebildet. Durch einen derart ausgebildeten Anrufbeantworter werden sowohl nach Ausgabe eines Ansagetextes kurze Informationen des Anrufers abfragebereit gespeichert, als auch zusätzliche Informationen zu einem im Fax-Gerät eingespeicherten Dokument nach Betätigung der Tipp-Taste 2 über den Telefonhörer aufgenommen und im Speichermedium des Anrufbeantworters eingespeichert. Ein erneutes Antippen der Tipp-Taste 2 stoppt die Aufnahme. Wird die Tipp-Taste 2 gedrückt gehalten, aktiviert man den Rücklauf. Nach Loslassen der Tipp-Taste 2 geht das Kombigerät automatisch in Wiedergabe bis zum erneuten Antippen der zweiten Funktionstaste. Erfindungsgemäß kann wie bei einem Diktiergerät mühelos ein Text auf einen Aufzeichnungsträger aufgezeichnet und jederzeit auch durch Übersprechen eines anderen Textes korrigiert werden. Ein Nebeneffekt der erfindungsgemäßen Lösung besteht darin, daß sich Über einen derart ausgebildeten Telefonhörer auch ein Ansagetext für den Anrufbeantworter leichter als bei den bekannten Lösungen aufzeichnen läßt. Im Fax-Gerät werden die Faxdaten und die Sprachinformationen in voneinander getrennten Speichern abgelegt. Im Ausführungsbeispiel nach Figur 1 werden die Sprachinformationen auf dem Bandgerät des Anrufbeantworters und die Faxdaten auf einem Festkörper-Speicher abgelegt. Eine weitere denkbare Ausführungsform basiert auf der Verwendung von zwei voneinander unabhängig arbeitenden Festkörperspeichern.

Die Übertragung der aufgezeichneten Informationen ( Fax- /Sprachaufzeichnung) erfolgt in analogen Netzen hintereinander und in digitalen Netzen, wie beispielsweise im ISDN-Netz, parallel. Dabei können auch Sprachkompressions-Verfahren eingesetzt werden. Dem Empfänger der Information wird das Fax-Dokument in gegenständlicher Form zugänglich. Nach Empfang des Fax-Dokumentes kann er über die Abfrage seines Anrufbeantworters die zusätzlichen Sprachinformationen beliebig oft abfragen.
Damit trägt das erfindungsgemäße Verfahren auch zur Vermeidung von Informationsverlusten bei und dokumentiert gleichzeitig wichtige Aussagen zum übermittelten Dokument. Die erfindungsgemäße Lösung eignet sich deshalb insbesondere für solche Fälle, bei denen zusätzlich zu einem übertragenen Dokument detaillierte umfangreiche Sprachinformationen erforderlich werden.
So kann beispielsweise ein Architekt der Bauaufsicht Details eines übersandten/gefaxten Bauplanes mündlich erläutern. Ein Sachbearbeiter kann beispielsweise über Sprachinformation auf besonders kritische Entwicklungen anhand einer übermittelten/gefaxten Umsatzstatistik hinweisen. Die mündliche Übermittlung von zusätzlichen Informationen ist insbesondere für den Personenkreis vorteilhaft, da zeitsparend, welcher das Schreiben per Tastatur nur mangelhaft beherrscht.

## Patentansprüche

1. Verfahren zur verbesserten Informationsübertragung mittles Fax-Endgerät, **dadurch gekennzeichnet**, daß parallel zu dem per Fax zu übertragenden Dokument in das Fax-Endgerät eines Absenders eine Sprachinformation zum Dokument eingegeben, aufgezeichnet und gespeichert wird, daß nach Aufbau einer Verbindung zum Fax-Endgerät eines Empfängers während der bestehenden Verbindung sowohl das Dokument als auch die Sprachinformation vom Fax-Endgerät des Absenders zum Fax-Endgerät des Empfängers übertragen werden, daß das Dokument im Fax-Endgerät des Empfängers gespeichert bzw. in Papierform ausgegeben wird, und daß gleichzeitig die übertragene Sprachinformation im Fax-Endgerätes des Empfängers abrufbereit aufgezeichnet und eingespeichert wird.

2. Verfahren nach Anspruch 1, dadurch gekennzeichnet, daß die zusätzlich zu übertragende Sprachinformation über ein Fernsteuer-Mikrofon, bzw. über das als Fernsteuer-Mikrofon geschaltete Mikrofon des Telefonhörers des Fax-Endgerätes, in den Speicher des Anrufbeantworters des Fax-Endgerätes des Absenders eingegeben und dort aufgezeichnet und eingespeichert wird, und daß während der bestehenden Verbindung zum Fax-Endgerät des Empfängers die Sprachinformation vom Anrufbeantworter des Fax-Endgerätes des Absenders zum Anrufbeantworter des Fax-Endgerätes des Empfängers übertragen und dort aufgezeichnet und abhörbereit gespeichert wird.

3. Anordnung zur verbesserten Informationsübertragung mittels Fax-Endgerät, **dadurch gekennzeichnet**, daß das Fax- Endgerät des Absenders zusätzlich mit einem Fernsteuer-Mikrofon ausgerüstet ist, das an eine steuerbare
Sprachaufzeichnungseinrichtung angeschaltet ist, daß die Sprachaufzeichnungseinrichtung einen Ausgang besitzt, der mit dem Leitungsausgang des Fax-Endgerätes verbunden ist, und daß das Fax-Endgerät des Empfängers zusätzlich mit einer Sprachaufzeichnungseinrichtung zur Aufzeichnung der während einer Übertragung empfangenen Toninformationen ausgerüstet ist.

4. Anordnung nach Anspruch 3, dadurch gekennzeichnet, daß als Fernsteuer-Mikrofon das Mikrofon des Telefonhörers des Fax-Endgerätes und als
Sprachaufzeichnungseinrichtung ein mit dem Fax-Endgerät verbundener Anrufbeantworter verwendet werden, wobei zur Ansteuerung des Mikrofons und des Anrufbeantworters an der Innenseite des Telefonhörers zwei voneinander getrennte Funktionstasten angeordnet sind, daß die erste Funktionstaste als Aufnahmetaste mit einer Leuchtdiode zur Anzeige der Aufnahmefunktion ausgebildet ist, welche das Mikrofon des Telefonhörers für die Aufnahmefunktion mit dem Speichermedium des Anrufbeantworters verbindet, und daß die zweite Funktionstaste als Steuertaste für die Anrufbeantworterfunktionen Aufnahme "Start", Stop, Rücklauf und Start "Wiedergabe" ausgebildet ist.
